# EUROPEAN PATENT APPLICATION

(11) **EP 4 517 400 A1**
(43) Date of publication of application: **05.03.2025**
(21) Application number: 23195079.1
(22) Date of filing: 04.09.2023
(51) Int. Cl.: G02B 6/38

(54) **TRANSMISSION CONNECTOR DEVICE**

(71) Applicant: Reichle & De-Massari AG, 8620 Wetzikon (CH)
(72) Inventor: Zidarova, Nadejda, 1574 Sofia (BG); Streiff, Claudio, 8610 Uster (CH)
(74) Representative: Daub, Thomas

(57) **Abstract**

The invention is based on a transmission connector device (12a; 12b) comprising an actuation unit (16a; 16b) for actuating a latching unit (18a; 18b) by pulling along an axial direction (20a; 20b) and thereby transferring the latching unit (18a; 18b) from a latch position into a release position, and comprising a locking unit (30a; 30b) for locking the actuation unit (16a; 16b), having an operating element (32a; 32b) for actuating the locking unit (30a; 30b).

For the purpose of providing a transmission connector device (12a; 12b ) with improved characteristics regarding a fixation and/or a releasement mechanism, a comfort and/or a construction, it is proposed that the transmission connector device (12a; 12b) comprises a reset element (60a; 60b) for transferring at least the actuation unit (16a; 16b) back from an unlocked position into a locked position, wherein the operating element (32a; 32b) is mounted rotatably around the axial direction (20a; 20b).

## Description

### State of the art

The invention relates to a transmission connector device according to the preamble of claim 1, a transmission connector according to claim 16, a system according to claim 17, a method for assembling the transmission connector device according to claim 18 and a method for operating the transmission connector device according to claim 19.

From the state of the art fiber optical plug connector devices comprising an actuation unit and a latching unit are known, wherein the latching unit is embodied as a snap-in unit having snap hitches for an intended snap-in connection between at least the actuation unit and a plug-in housing. Before actuating the latching unit is possible, another user operation can be necessary to unlock the actuation unit.

The objective of the invention is, in particular, to provide a transmission connector device with improved characteristics regarding a fixation and/or a releasement mechanism, a comfort and/or a construction. The objective is achieved, according to the invention, by the features of claims 1, 16, 17, 18 and 19, while advantageous implementations and further developments of the invention may be gathered from the dependent claims.

### Advantages of the invention

The invention is based on a transmission connector device comprising an actuation unit for actuating a latching unit by pulling along an axial direction and thereby transferring the latching unit from a latch position into a release position, and comprising a locking unit for locking the actuation unit, wherein the locking unit has an operating element for actuating the locking unit.

It is proposed that the transmission connector device comprises at least one reset element for transferring at least the actuation unit back from an unlocked position into a locked position, wherein the operating element is mounted rotatably around the axial direction.

By means of the invention an enhanced fixation and releasement mechanism, an improved construction, in particular an especially compact construction, and/or a higher comfort can be achieved. Preferably, a particularly flexible mechanism for fixing and for releasing a transmission connector device can be achieved. In particular, an improved releasement mechanism for releasing a connection between the transmission connector device and a cooperating unit, for example an adapter unit can be achieved. Moreover, a particularly user-friendly and easy-handling construction can be achieved, in particular for locking and unlocking of at least the actuation unit. Furthermore, an automatic locking mechanism can be provided. Advantageously, a fixation of the transmission connector device in particular with a cooperating unit, preferably an adapter unit, can be improved and in particular made more secure. Advantageously, a higher user and/or installer comfort can be achieved. Moreover, a transmission connector device can be provided for use in a harsh environment, wherein the provided transmission connector device is in particular capable of handling high requirements of the environment. Advantageously, a high-density population of transmission connector devices wherein a disturbance of the installation and/or uninstallation of the transmission connector device to one another is reduced or avoided, is possible.

The transmission connector device can be part of a transmission connector. The transmission connector device can be a subassembly of the transmission connector or can be embodied as the whole transmission connector. The transmission connector device can be embodied as a data transmission connector device and/or a power transmission connector device. Further, the transmission connector device can be an optical connector device, especially an optical fiber connector device. Preferably, the transmission connector device is a connector device for small, simple and/or multi-fiber fibers. For example, the transmission connector device can be a LC, advantageously a LC-D, SC, MPO and/or MTP connector device. According to the transmission connector device, the transmission connector can be embodied as a data transmission connector and/or a power transmission connector. Further, the transmission connector can be an optical connector, especially an optical fiber connector. Preferably, the transmission connector is a connector device for small, simple and/or multi-fiber fibers. For example, the transmission connector can be a LC, advantageously a LC-D, SC, MPO and/or MTP connector. Alternatively or additionally, the transmission connector and the transmission connector device could be intended to provide a different type of connection, for example for connecting an electrical conductor. Preferably, the transmission connector device, in particular the transmission connector, is intended to a use/to be used in a harsh environment.

In particular the transmission connector, preferably the transmission connector device, is a plug connector, in particular a plug connector device. The transmission connector device can be part of a system. In particular, the system is a transmission system for data and/or power. Preferably, the system can be an optical fiber system. Preferably, the whole system is intended for a use/to be used in the harsh environment. The system can comprise a, preferably the already aforementioned, cooperating unit for connecting with the transmission connector device, wherein the cooperating unit has at least one recess for receiving at least part of the latching unit.

Particularly preferably, the cooperating unit is embodied as an, in particular as the already aforementioned, adapter unit. The adapter unit can be configured for connecting the transmission connector device with at least one further transmission connector device, for example one further data and/or power transmission connector device. At least the further transmission connector device can be part of the system. Advantageously, the cooperating unit is intended to establish at least a safe and/or secure connection between the transmission connector device with the further transmission connector device. Alternatively, the cooperating unit could be embodied as a corresponding plug- in component of a device or the likes. Particularly preferably, the cooperating unit is intended for the at least safe and/or secure connection in the harsh environment.

The transmission connector device preferably comprises the latching unit, in particular at least partially and preferably completely. In particular, the latching unit is configured to provide a latching mechanism. Advantageously, the latching unit is configured for a reversible, preferably non-destructive, releasing and/or latching. In this context, the "latch position" is to be understood as a position, in which the latching unit latches the transmission connector device with the cooperating unit. In particular, if the latching unit is in the latch position, the transmission connector device is in a connected position with the cooperating unit. Under a "release position" a position is to be understood, in this context, in which the latch between the transmission connector device and the cooperating unit is released. The latching unit can be formed separately to the actuation unit. In particular, the latching unit is formed separately to the locking unit.

By "pulling the actuation unit along the axial direction" can be understood that a user and/or installer pulls the actuation unit itself along the axial direction directly. Alternatively, and preferably in this context, it should be understood that the user and/or installer pulls another unit and/or element of the transmission connector device which is connected to the actuation unit and thereby pulls the actuation unit along the axial direction indirectly. Preferably, the actuation unit is configured to be pulled in regard to the cooperating unit for transferring the latching unit from the latch position into the release position, in particular to release the connection between the transmission connector device and the cooperating unit. The transmission connector device is preferably configured to be pushed along the axial direction in regard to the cooperating unit to connect and in particular to latch to the cooperating unit. Preferably, the actuation unit transfers a force by the pulling along the axial direction to the latching unit to transfer the latching unit to the release position. The actuation unit preferably comprises an actuation element. The actuation unit, in particular the actuation element, is preferably implemented as an outer hull and/or sleeve for receiving a portion of the transmission connector device. The actuation unit, in particular the actuation element, is preferably configured to receive the holding unit at least to a great part. The phrasing "to a great part" should in particular be understood in this context to mean, at least 55 %, advantageously at least 65 %, preferably at least 75 %, particularly preferably at least 85 % and especially advantageously at most 95 % of a volume and/or mass component of an object. The actuation unit can receive the holding unit concentrically around the axial direction.

The locking unit is configured for locking the actuation unit in the locked position, in particular for preventing actuation of the latching unit in the locked position. The locking unit is in particular configured to provide an additional locking mechanism for preventing a movement of the transmission connector device and the cooperating unit relative to each other besides the latching mechanism provided by the latching unit. The locking unit can lock the actuation unit when the transmission connector device is in the connected position with the cooperating unit. The locking unit can lock the actuation unit when the latching unit is in the latch position. Preferably, the locking unit is operable without additional tools.

By operating the operating element at least one further element of the transmission connector device can be moved and/or actuated and/or operated. Preferably, the operating element is rotatable, in particular around the axial direction, preferably relative to the actuation unit, for transferring the actuation unit from the locked position to the unlocked position and/or from the unlocked position to the locked position. In particular, the locked and/or unlocked position of the actuation unit relates to a position relative to the operating element, in particular a rotation of the operating element relative to the actuation unit. Preferably, the operating element is intended to be rotated, preferably directly or possibly indirectly, by the user and/or installer, to transfer the actuation unit from the locked position to the unlocked position. In particular, the locking unit is locked in the locked position of the actuation unit and unlocked in the unlocked position of the actuation unit. The locked and unlocked position of the actuation unit corresponds in particular to a locked and unlocked position of the operating element. The operating element is preferably mounted rotatably around at least part of a cable and/or a transmitter and/or a conductor of the cable to be connected by means of the transmission connector device. In particular, the operating element is intended to be rotated by an angle of at least 15°, preferably at least 25°, particularly preferably at least 35° and particularly advantageously at least 45°, in particular improving a comfort to the user and/or a safety. The operating element can be intended to be rotated by an angle of at most 360°, in particular at most 270°, advantageously at most 180°, preferably at most 90°, particularly preferably at most 60° and particularly advantageously at most 50°. Advantageously, the angle of rotation can be 35° or 45°. Preferably, the operating element is intended to be contacted by a user and/or installer for actuating the locking unit, in particular at least for unlocking the locking unit.

Preferably, the reset element is intended to transfer at least the actuation unit automatically back from the unlocked position into the locked position, if the operating element is released by the user and/or installer. In particular, the reset element is configured to provide a reset force to transfer the actuation unit from the unlocked position into the locked position. A rotational movement of the operating element relative to the actuation unit can be generated by the reset element. The rotational movement for locking the locking unit is preferably directed in an opposite direction of a rotational movement for unlocking the locking unit. Preferably, the user and/or installer preferably has to apply at least the reset force to the operating element, in particular for the rotation of the operating element, to transfer the actuation unit from the locked position to the unlocked position. In particular, the reset force is generatable by the movement, in particular the rotation, of the operating element to transfer the actuation unit the locked position to the unlocked position.

Preferably, the transmission connector device comprises a holding unit. The holding unit can be intended for holding the latching unit with respect to the axial direction in relation to the actuation unit. Advantageously, a fixation of the latching unit can be improved. The operating element is preferably movably connected to the holding unit in at least one direction. The operating element may be connected to the holding unit by a force-fit and/or form-fit and/or adhesive-bond connection. The operating element can be fixed to the holding unit. For example, the operating element can be latched and/or snapped with the holding unit. Alternatively, the operating element can only contact the holding unit, without being fixed to the holding unit. In particular, the operating element is rotatable relative to the holding unit. Preferably, the holding unit is formed separately to the actuation unit and/or the operating element and/or can be formed separately to the latching unit and/or the reset element. Preferably, the holing unit is configured to a fixed position cable in the locked and unlocked position. The holding unit is preferably configured to maintain a fixed rotational position around the axial direction in the locked and unlocked position. The holding unit is preferably configured to maintain a fixed rotational position around the axial direction in the locked and unlocked state. The holding unit is preferably configured to maintain a fixed translational position, in particular in regard to the axial direction, relative to the cooperating unit and/or the cable in the locked and unlocked position. The holding unit is preferably unmovably fixed to the cable. Preferably, the holding unit is made in a one-piece embodiment. The holding unit can be made at least partially or to a great part or completely from a mineral and/or a metal and/or preferably a plastic. By "made in a one-piece embodiment" is to mean, connected at least by substance-to-substance bond, for example by a welding process, a gluing process, an injection-molding process, and/or another process that is deemed expedient by someone skilled in the art and/or advantageously formed in one piece, like for example by a production from a cast and/or by a production in a one-component or multi-component injection-molding procedure, and advantageously from a single blank. The holding unit is preferably implemented in a cylindrical shape and/or as a sleeve intended to receive at least the cable and/or parts of the cable.

The reset element can be connected, in particular fixed, to the holding unit by a force-fit and/or form-fit and/or adhesive-bond connection. Advantageously, the reset element is snapped with the holding unit. Preferably, this fixation between the holding unit and the reset element exists in the locked position and unlocked position of the actuation unit.

Preferably, the locking unit and/or the actuation unit comprise/s a guidance element for guiding the user and/or installer, in particular concerning a movement to be carried out by the user and/or installer, regarding locking and/or unlocking of the actuation unit. Possibly, the locking unit, preferably the guidance element, can comprise arrows for visual guiding the user and/or installer. Alternatively or additionally, the locking unit can be configured to give the user and/or installer an acoustic feedback. Preferably, the guidance element indicates the rotational direction for unlocking the actuation unit. The unlocking of the locking unit is preferably correlated to a one-directional rotation of the operating element, whose direction the guidance element can in particular indicate.

In particular, the transmission connector device is connectable to the cooperating unit by being pushed towards the cooperating unit along the axial direction to engage the latching, in particular by the user and/or installer. Advantageously, no rotational movement carried out by the user and/or installer is necessary to connect the transmission connector device, in particular due to the reset element and the design of the latching unit. The latching is preferably releasable by a rotation of the operating element and a subsequent pulling of at least the actuation unit along the axial direction, in particular by the user and/or installer. Advantageously, a user comfort for the connection of the transmission connector device can be increased, wherein the transmission connector device can in particular be connected especially quickly and/or in a simple manner. Furthermore, accidental disconnection of the transmission connector device can be advantageously avoided by means of the locking unit.

The axial direction in particular extends at least substantially parallel to and/or along a main extinction axis of the transmission connector device. Preferably, the axial direction extends at least substantially parallel to and/or along a main extension axis of the actuation unit and/or the holding unit and/or the operating element and/or the reset element. By a "main extension axis" of an object is herein in particular an axis to be understood, which extends parallel to a longest edge of a smallest geometric rectangular cuboid that just still completely encloses the object, and in particular runs through the center point of the cuboid. The term "at least substantially parallel" is to mean an orientation of a direction relative to a reference direction, in particular the axial direction, wherein the direction relative to the reference direction has a deviation smaller than 8°, advantageously smaller than 5° and especially advantageously smaller than 2°. In particular, the locking unit prevents pulling of at least the actuation unit along the axial direction.

In this context, "configured" and/or "intended" is to mean specifically programmed, designed and/or equipped. By an object being configured and/or intended for a certain function, it is to be understood that the object fulfills and/or implements this certain function in at least one application state and/or operating state.

For the purpose of improving a fixation and/or locking, it is proposed that the locking unit prevents a relative movement of the actuation unit along the axial direction, in particular in the locked position. Thereby, the transmission connector device can be advantageously be prevented from disconnecting from the cooperating unit by means of the locking unit. The relative movement of the actuation unit can be a movement at least substantially parallel to the axial direction. The relative movement is in particular a movement relative to the holding unit and/or cooperating unit.

In one possible embodiment of the invention, it is proposed that the transmission connector device comprises a cable boot unit, which at least partially forms the operating element. Thereby, a particularly user-friendly and easy-handling locking and/or unlocking of at least an actuation unit can be achieved. Due to the cable boot unit, which at least partially forms the operating element, a comfort can be improved and/or a compact and/or simple and/or efficient construction of the transmission connector device can be provided. In particular, the cable boot unit is configured for protecting a cable from bending and/or kinking. Preferably, the cable boot unit is mounted rotatably around the axial direction. The locking unit is preferably configured to be unlocked by means of a rotation of the cable boot unit, in particular by means of the user and/or installer. The latching unit is preferably configured to be actuated by pulling of the cable boot unit and thereby the actuation unit along the axial direction, in particular by means of a user operation, and thereby transferring the latching unit from the latch position into the release position. Preferably, the cable boot unit is intended to be contacted by the user and/or installer and can in particular serve as a handle.

The operating element is preferably fixed to the actuation unit with respect to at least one direction, in particular the axial direction. For the purpose of improving a construction and/or a fixation and/or releasement mechanism, it is proposed that the cable boot unit is fixed to the actuation unit with respect to at least one direction, in particular the axial direction. Advantageously, a movement of the cable boot unit and/or the operating element can be effectively transferred to the actuation unit. The operating element, in particular the cable boot unit, is in particular fixed to the actuation unit with respect to the at least one direction in at least the unlocked position and preferably also in the locked position. Preferably, the operating element, in particular the cable boot unit, is unmovably connected to the actuation unit in regard to a translational movement of the operating element and the actuation unit relative to each other, in particular along the axial direction. The operating element, in particular the cable boot unit, can be movably connected to the actuation unit in regard to a rotational movement of the operating element and the actuation unit relative to each other, in particular around the axial direction. The actuation unit can maintain a fixed rotational position for a rotation of the operating element around the axial direction to transfer between the unlocked and locked position. The operating element, in particular the cable boot unit, can be fixed to the actuation unit by a force-fit and/or form-fit and/or adhesive-bond connection. The actuation unit, in particular at least the actuation element, can comprise at least one counter fit element, which extends at least partially along the circumferential direction of the actuation unit. Preferably, the counter fit element is arranged on an inside of the actuation unit and/or a rest of the actuation unit, in particular on an inside of the actuation element and/or arrest of the actuation element. The operating element, in particular the cable boot unit, preferably comprises at least one fit element, in particular at least one edge, for engaging and/or abutment with the counter fit element. The counter fit element can in particular extend entirely around the circumferential direction. Alternatively, the actuation unit can comprise at least two counter fit elements, which extend only partially along the circumferential direction of the actuation unit. The counter fit element can be bar-shaped and/or implemented as an edge of the actuation unit.

The cable boot unit and/or the operating element can comprise at least one fixating arm. In particular the fixating arm can be configured for at least a fixation with the holding unit. The cable boot unit and/or the operating element can comprise more than one fixating arm, for example two fixating arms, which are in particular implemented identically to each other. Advantageously, the fixating arm is snapped with the holding unit in the locked position. Preferably, part of the fixating arm is received in a fixating recess of the holding unit in the locked position, in particularly in a fixed position, advantageously preventing a relative movement of the cable boot unit and/or operating element, in particular of the fixating arm, along the axial direction relative to the holding unit and/or cable boot unit. The fixating arm is preferably only movable out of the fixating recess by the, in particular one-directional, rotation of the cable boot unit and/or operating element, in particular of the fixating arm, around the axial direction to unlock the locking unit. Preferably, the holding unit has a stopping element, marking an end position, in particular rotational end position, at which the unlocked position is reached. The fixating arm preferably abuts the stopping element in the unlocked position. The holding unit can have at least one guiding channel, which guides the movement of the cable boot unit and/or operating element, in particular the fixating arm. In particular, the fixating arm is received at least partly in the guiding channel. Preferably, the guiding channel extends from the fixating recess to the stopping element in the circumferential direction and in particular in the axial direction, starting from the stopping element. Preferably, the locking unit comprises the fixating recess and/or the stopping element and/or the guiding channel and in particular the fixating arm.

The operating element, in particular the cable boot unit, is preferably unmovably fixed to the holding unit in regard to the translational movement along the axial direction in the fixed position. Preferably, for transferring the actuation unit from the locked position into the unlocked position, the operating element, in particular the cable boot unit, is rotatable around the axial direction, thereby releasing the fixation, in particular in regard to the blocked translational movement along the axial direction, with the holding unit. In an unfixed position the operating element, in particular the cable boot unit, is pullable along the axial direction, in particular relative to the cooperating unit and/or holding unit, for actuating the actuation unit. In at least the unlocked position the fixating arm can contact the counter fit element. Preferably, the fixating arm, in particular an edge of the fixating arm, abuts and/or rests against the counter fit element along the axial direction. In particular, the fixating arm comprises the fit element. The fixating arm is preferably rotatable relative to the actuation unit, in particular the counter fit element. By pulling the cable boot unit, the fixating arm can push against the counter fit element and thereby, the actuation unit can be moved and/or actuated with the cable boot unit along the axial direction.

Preferably, the operating element and/or the cable boot unit are/is used in the locking mechanism and the latching mechanism. The operating element and/or the cable boot unit can be used for transferring the latching unit from the latch position into the release position. Particularly preferably, the operating element is, in particular in the unlocked position, pullable along the axial direction for actuating, preferably for pulling, the actuation unit. By pulling the operating element along the axial direction, the actuation unit can also be movable and/or actuated along the axial direction. Preferably, a relative movement of the operating element and/or the cable boot along the axial direction relative to the holding unit is prevented in the locked position.

Furthermore, it is proposed that the reset element is an elastic element. Thereby, the reset force of the reset element can be provided in an especially simple and/or efficient and/or reliable manner. Advantageously, the reset force is automatically provided by a deformation of the reset element by means of the user and/or installer. In particular, no further outside energy source is necessary to provide the reset force. Alternatively or additionally, it would be conceivable, that the reset element could for example acquire the reset force at least partly from the user and/or installer and/or a motor and/or hydraulic and/or pneumatic and/or gravitational and/or electric and/or magnetic forces and/or the likes. The reset element could be implemented to be inelastic. An "elastic element" is in particular to be understood as an element which can be repeatedly deformed without the element being mechanically damaged or destroyed and which, in particular, seeks to automatically and/or autonomously return to a basic shape after deformation. In particular, the elastic element is flexible and/or elastic and/or stores mechanical energy. The elastic element can be a spring-elastic element. Preferably, the reset element is in a stressed state in the unlocked position. The reset element is preferably in a relaxed state in the locked position. In particular, the deformed state of the reset element, in particular of the elastic element, corresponds to a stressed state of the reset element. The reset element preferably has the basic shape in a relaxed state. The reset element can be implemented to have rubber-elastic properties and/or be spring-elastic, for example by means of a spiral and/or leaf spring, and/or the likes. In particular, the operating element and/or the cable guard unit is/are elastically connected to the holding unit by means of the reset element.

To improve a construction and/or an efficiency of the reset element, it is proposed, that at least portions of the reset element are rotatable around the axial direction. Thereby, the reset force can be effectively directed in an advantageous direction, in particular by means of a particularly simple and/or compact construction. Preferably, a first end of the reset element is connected to the holding unit, in particular unmovably relative to the holding unit. A second end of the reset element is preferably connected to the operating element, in particular unmovably relative to the operating element. In particular, the first end of the reset element is in a fixed position during operation, in particular rotation, of the operating element. The second end of the reset element is preferably configured to move, in particular rotate, with the operating element. Preferably, the reset element is configured to be transferred from the relaxed state to the stressed state by means of a relative movement between the first and the second end of the reset element for the operation, in particular rotation, of the operating element. In particular, at least the second end of the reset element is rotatable around the axial direction. The reset element is in particular configured to twist the operating element, in particular the cable boot unit, relative to the holding unit.

Preferably, the reset element is configured to be twisted from the relaxed state to the stressed state, in particular a twisted state, for unlocking the locking unit. The reset element is preferably configured to automatically and/or autonomously untwist from the stressed, in particular twisted state, to the relaxed state of the reset element, in particular in absence of outside forces. Advantageously the reset element is configured to untwist for locking the locking unit and in particular to transferring at least the actuation unit back from the unlocked position into the locked position. In particular, the reset element is configured to be twisted and/or to untwist around the axial direction. Furthermore, it is proposed in at least one embodiment of the invention, that the reset element comprises a torsion spring, by which in particular an especially simple and/or effective construction of the reset element can be achieved. The reset element can be formed as the torsion spring. Preferably the relaxed and/or stressed state of the reset element corresponds to a relaxed and/or stressed state of the torsion spring. The reset element, in particular the torsion spring, is preferably cylindrical. Preferably, the reset element comprises and/or is a helical torsion spring. The reset element is preferably configured to be twisted by sideways forces, in particular perpendicular to the axial direction, applied to first and/or second end of the reset element. In particular, a coil of the reset element, in particular the torsion spring, is twisted tighter in the stressed, in particular twisted state, relative to the relaxed state. The reset element, in particular the torsion spring, can have more than two windings. However, preferably, the reset element has less than two windings. Thereby, a length of the transmission connector device can be advantageously shortened, in particular providing a compact construction of the transmission connector device. The transmission connector device can comprise merely one reset element, in particular torsion spring.

Moreover, it is proposed, that the reset element is at least partially made of metal and/or of a wire. Preferably, the reset element is, in particularly at least partially, made of a metal wire. Thereby, a resistance and/or a durability of the reset element and in particular the transmission connector device can be improved for use in a harsh environment. Advantageously, a temperature resistance, in particular at least a heat resistance, can be improved. Furthermore, the reset element and in particular the transmission connector device can be constructed to be advantageously compact, in particular reducing possible lateral forces of the reset element. Alternatively of additionally, the reset element can at least partially be made of a different material than metal, for example plastic and/or a mineral and/or carbon fiber and/or rubber and/or the likes. Moreover, a cost efficiency can be advantageously improved.

To improve a construction, it is proposed that the wire has a diameter of maximally 5 mm. Preferably, the wire has a diameter of maximally 4 mm, advantageously of maximally 3 mm, particularly preferred of at most 2 mm, advantageously preferred of maximally 1 mm and/or of minimally 0.1 mm, particularly preferred of at least 0.5 mm and advantageously preferred of minimally 0.7 mm. The wire can have a diameter of at least substantially 0.8 mm, wherein the wire diameter deviates in particular less than 25 %, preferably less than 10 % and particularly preferably less than 5 % from 0.8 mm. Thereby, a reset element with advantageous reset forces and/or a particularly compact design and /or cost efficiency can be achieved. The reset element can be formed separately from the locking unit, in particular the operating element. Preferably, the reset element formed as a torsion spring and/or made of metal and/or a wire, is formed separately from the locking unit, in particular the operating element. Thereby, a construction of the reset element can be simplified and/or a flexibility, in particular regarding a material choice and/or shape of the reset element, can be increased.

Alternatively, in particular in another possible embodiment of the invention, it is proposed that the reset element is implemented integrally with at least part of the locking unit. In particular, the reset element is implemented integrally with the operating element. Advantageously, a production efficiency can be improved and/or a compact design can be achieved. In particular, the reset element can be fixed to the operating element in a particular efficient and/or reliable manner. Furthermore, a number of separate parts for assembly of the transmission connector device can be advantageously decreased, decreasing a complexity of the transmission connector device. "implemented integrally" is in particular to mean connected at least by substance-to-substance bond, for example by a welding process, a gluing process, an injection molding process, and/or another process that is deemed expedient by someone skilled in the art, and/or advantageously formed in one piece, like for example by a production from a cast and/or by a production in a one-component or multicomponent injection molding procedure, and advantageously from a single blank. Preferably, the reset element is formed in one piece with at least part of the locking unit, in particular the operating element. The reset element can be made of a same material as the operating element, in particular a material with sufficient elastic properties, such as a plastic and/or metal.

Furthermore, it is proposed, that the reset element comprises an arm-shaped element, by which in particular an advantageous effective reset force of the reset element can be achieved in a particularly compact and/or simple manner. The reset element can be formed as the arm-shaped element. The reset element, in particular the arm-shaped element, can advantageously be implemented integrally with the operating element. In particular, the reset element can be implemented differently from a spring. The arm-shaped element is in particular elongate and/or has an in particular curved and/or angled longitudinal extent which is in particular larger by a factor of at least 2 than at least one transverse extent, in particular every transverse extent, that is at least substantially perpendicular in relation to the longitudinal extent. The term "at least substantially perpendicularly" is here in particular to mean an orientation of a direction relative to a reference direction, wherein the direction and the reference direction, in particular viewed in a projection plane, include a 90° angle and the angle has a maximum deviation of in particular less than 8°, advantageously less than 5° and especially advantageously less than 2°. The transmission connector device can comprise more than reset elements, in particular arm-shaped elements, which are preferably implemented identically to one another. The reset elements can be formed separately from each other or are preferably implemented integrally with each other. Preferably, the transmission connector device comprises two reset elements, in particular arm-shaped elements. The reset elements, in particular the arm-shaped elements, are preferably symmetrically arranged around the axial direction in at least a mounted state of the transmission connector device. Alternatively, the reset elements can be arranged asymmetrically around the axial direction and/or comprise a different symmetry. A first end of the arm-shaped element is preferably latched and/or snapped and/or fixed to the holding unit. The first end of the arm-shaped element could be implemented integrally with the holding unit. A second end of the arm-shaped element is preferably connected, in particular unmovably connected relative to the operating element, and/or fixed to and/or implemented integrally with the operating element and/or the cable boot unit. In particular, the first end of the arm-shaped element is in a fixed position, in particular in the unlocked and locked position, while the second end of the arm-shaped element is intended, in particular fixated, to move with the operating element. The arm-shaped element is preferably configured to be bent from the relaxed state of the reset element to the stressed state of the reset element. The elongate direction of the arm-shaped element can be at least substantially parallel to the axial direction, in particular at least in the locked position of the actuation unit and/or the relaxed state of the reset element. Preferably, the relaxed and/or stressed state of the reset element corresponds to a relaxed and/or stressed state of the arm-shaped element. Preferably, the arm-shaped element is implemented to bend in the radial direction and in particular a transverse direction of the arm-shaped element.

To achieve a particularly compact transmission connector device, it is proposed that an overall length of the actuation unit is less than 60 mm in the axial direction. Advantageously, the overall length of the actuation unit is less than 55 mm, preferably maximally 50 mm, particularly preferably less than 40 mm and particularly advantageously less than 35 mm. In particular, a length of the transmission connector device in the axial direction is at least by a majority, in particular at least by 55 %, advantageously by at least 65 %, preferably by at least 75 %, particularly preferably by at least 85 % and particularly advantageously by at least 95 % of the length of the transmission connector device, made up from the length of the actuation unit and at least a partial length of the cable-boot unit in the axial direction. Advantageously, an especially user-friendly transmission connector device can be achieved by means of the compact implementation, wherein in particular an improved handling of the transmission connector device can be provided. Preferably, the overall length of the actuation unit is a sum of at least a length of the actuation element and in particular a length of the guidance element in the axial direction.

In another aspect of the invention, which can in particular be considered in combination with as well as separately from other aspects of the invention, it is proposed that the transmission connector device comprises a cable receptacle unit configured for receiving an oval-shaped cable. Thereby, a flexibility of the transmission connector device can be improved, in particular regarding an ability to receive different shapes of cables. Preferably, the cable receptable unit is configured for receiving different, in particular rounded, shapes of cables beside oval-shaped cables and/or special cases of oval-shaped cables, for example elliptical-shaped and/or circular-shaped cables. The cable receptable unit preferably comprises any part of the transmission connector device intended to receive the cable and/or which is implemented according to a cable shape to be received. The cable receptable unit in particular comprises at least the cable boot unit and/or can comprise parts of the transmission connector device outside of the cable boot unit in regard to the axial direction. In particular, the cable boot unit is configured for receiving an oval-shaped cable. In particular, the cable boot unit is configured for receiving a rounded, in particular also a circular, cable. Preferably, the cable boot-unit is configured to be rotatable around the received oval-shaped cable and in particular the rounded cable.

Moreover, it is proposed, that the transmission connector device comprises a, in particular the already aforementioned, cable receptacle unit configured for receiving a cable with a diameter of less than 10 mm and/or more than 2 mm. Advantageously, a flexibility of the transmission connector device can be improved, in particular regarding an ability to receive different sizes of cables. The cable receptacle unit is preferably configured to receive a cable with a diameter of at least 3 mm, in particular at least 4 mm and/or at most 9 mm, in particular at most 8.5 mm. Preferably, the cable receptacle unit is configured to receive a preferred cable with at least one diameter, in particular a minimal diameter, of 4 mm to 6 mm and/or a diameter, in particular a maximal diameter, of 8 mm to 9 mm. In particular, a maximal and/or minimal limit of the cable diameter to be received refers to a corresponding maximal and/or minimal diameter of the cable, which can in particular be oval-shaped and have more than one diameter value. Alternatively, the cable receptable unit can be configured to receive cables with bigger or smaller diameters than stated above, for example for a cable for a fiber connection.

Furthermore, it is proposed, that the transmission connector device comprises the latching unit, which comprises an at least partially ring-shaped spring element. Thereby, an enhanced fixation and releasement mechanism, construction and/or a higher comfort can be achieved. Moreover, a compact design can be achieved. This allows achieving a particularly user-friendly and easy-to use latching unit which can be preferably latched and released without additional tools. Due to a spring element the latching unit can be quickly and easily released and/or latched, in particular simplifying a handling. The at least partially ring-shaped spring element is to be understood, in this context, as an elastic element. The spring element can be stretchable, in particular if the operating element is pulled along the axial direction. In particular, in the release position the latching unit, in particular the spring element, is deformed so that the latch is released. The at least partially ring-shaped spring element can be at least 20 %, in particular at least 40 %, advantageously 60 % and preferably at least 80 %, ring-shaped in a circumferential direction of the spring element. The ring-shaped element can be completely ring-shaped in the circumferential direction. In particular the at least partially ring-shaped spring element differs from coil springs and is differently formed to a coil spring. The spring element can be made at least partially or to a great part or completely from a mineral and/or a plastic and/or a metal, in particular spring steel or a stainless steel. The spring element is preferably embodied as a wire clip. In this way, a compact, narrow and/or efficient construction and/or design of at least a spring element, in particular a latching unit, can be provided. Additionally, a fixation can be further improved. Preferably, the spring element is made in a one-piece embodiment. In particular, the spring element is symmetrical with respect to a symmetry plane. It can be possible, that the wire clip is closed. Advantageously, the spring element is embodied as a C-shaped wire clip. Thereby, a compact, narrow and/or efficient construction and/or design of at least a spring element, in particular a latching unit, can be further provided. Moreover, a handling can be optimized. Since, the proposed C-shape wire clip has only one opening, a user-friendly and easy-to use latching unit can be achieved, which can be preferably latched and released without additional tools. Furthermore, an efficient, in terms of product and/or manufacturing and/or cost efficiency, can be increased. In particular, the spring element has only one opening. The phrasing "embodied as a C-shaped wire clip" is to mean, in this context, that the shape of the spring element has an approximately C-shaped form which resembles at least 50 %, in particular at least 70 % and preferably at least 90 % of a typical C-shape. It could be conceivable that the shape of the C-shaped wire clip corresponds exactly, in particular to 100 %, to a C-shape. The spring element may have concave hollows in his shape, in particular the C-shape, along the circumferential direction. It can be possible, that the spring element has at least two, preferably three, concave hollows in the shape, in particular the C-shape.

Preferably, the latching unit, in particular the spring element, cooperates with the recess of the cooperating unit for latching the transmission connector device with the cooperating unit. In the latch position the latching unit can be received at least partially in the recess. The latching unit can snap at least partially into the recess in the latch position. The cooperating unit can have more than one recess, for example at least two recesses and preferably three recesses. The latching unit can be intended for snap-in in particular simultaneously in all recesses of the cooperating unit, in particular at least the three recesses of the cooperating unit. Advantageously, by pulling the actuation unit along the axial direction the latching unit can be released in particular simultaneously from all recesses of the cooperating unit, in particular from at least the three recesses of the cooperating unit. The holding unit is preferably configured for holding at least a portion of the latching unit, in particular of the spring element, on an inner side of the holding unit. The holding unit and the actuation unit can hold the latching unit at least in sections on opposite sides of the latching unit, in particular in regard to a circumferential direction of the latching unit and in particular the spring element. Advantageously, the holding unit holds the latching unit in the latch position and at least in the release position. Preferably, the holding unit comprises at least one hole which is configured for receiving the latching unit, in particular the spring element. The holding unit can comprise several holes, in particular at least two holes in a circumferential direction of the holding unit. Advantageously, the holding unit has three holes for receiving the spring element at least in sections. Particularly preferably, the concave hollow of the spring element is arrangeable in the hole. In the latch position the latching unit can extend through the hole and be inserted in the recess of the cooperating unit.

Preferably, the actuation unit is configured to hold further portions of the latching unit, in particular of the spring element, on an outer side of the actuation unit. The actuation unit is in particular at least partly arranged around an outer side of the holding unit. The actuation unit preferably comprises at least one channel, in which the latching unit is partially arranged, and the actuation element, which at least partially delimits the channel. In this way, a connection, preferably a fixation, of a latching unit with an actuation element can be optimized. In addition, an unintentional detachment of the latching unit in particular from at least the actuation unit can be prevented. Thereby, a security and/or comfort for a user and/or installer can be improved. Additionally, a compact and/or efficient construction and/or design can be provided. The actuation unit can comprise several channels, in particular at least two channels in a circumferential direction of the actuation unit. Preferably, the actuation unit comprises three channels, in which the latching unit, in particular the spring element, is partially arranged. Particularly preferably the channels are embodied identical to each other. The holding unit can hold the latching unit with respect to the axial direction in relation to the actuation element. The holding unit and the actuation element can hold the latching unit, in particular the spring element, at least in sections on opposite sides of the latching unit, in particular in regard to the circumferential direction of the latching unit and in particular the spring element. The holding unit and the actuation element can be arranged on opposite sides of the latching unit. Advantageously, in circumferential direction of the actuation unit the channel and the holding unit are arranged side-by-side. In the circumferential direction of the actuation unit, the channels and the holding unit can be arranged in alternation, in particular in a section around the latching unit. In the circumferential direction of the actuation unit there can be at least two channels, preferably at least three channels. Preferably, the actuating unit comprises at least one guiding element which is intended to stretch the latching unit by pulling the actuation unit. In this way, a simple and efficient releasing of a latching unit can be provided. Advantageously, this allows achieving a particularly user-friendly and easy-to use latching unit which can be released without additional tools. Thereby, a comfort for a user and/or installer can be optimized. Preferably, the latching unit is stretchable without additional tools. The guiding element can be intended for stretching the latching unit and growing a diameter of the latching unit for the at least 5 %, in particular at least 10 % and advantageously at least 20 %. Preferably, the guiding element is movable at least partially under the latching unit by pulling the actuating unit. In this way, a releasement mechanism can be further improved, wherein a simple and efficient releasing of a latching unit can be provided. Furthermore, a handling can be simplified. Moreover, a compact design can be achieved. In particular by pulling the actuation unit the guiding element is movable at least partially under the latching unit and thereby stretches the latching unit, in particular the spring element. By stretching the latching unit, the connection between the transmission connector device and the cooperating can be released. Preferably, in the release position the latching unit is at least partially stretched. Particularly preferably, in the release position the guiding element is at least partially arranged under the latching unit. The actuation element and/or the guiding element can be made at least partially or to a great part or completely from a mineral and/or a metal and/or preferably a plastic. Advantageously, the actuation element and the guiding element are formed in a one-piece embodiment. The actuation unit can be formed in a one-piece embodiment. The guiding element preferably at least partially delimits the channel. The guiding element can be intended for holding the latching unit in the channel at least in the latch position. Advantageously, the guiding element and the actuation element hold the latching unit, in particular the spring element, in the channel at least in sections on sides of the latching unit facing away from each other, in particular in regard to a direction parallel to the axial direction. In particular, the actuation element and the guiding element are arranged on opposite sides of the channel to delimit the channel, in particular in regard to the direction parallel to the axial direction. The actuating unit can comprise more than one guiding element, namely at least two guiding elements. Preferably, the actuating unit comprises at least three guiding elements. The actuating unit can have as many guiding elements as it comprises channels.

The reset element is preferably also intended to automatically transfer the latching unit into a rest position. By such a design/construction of a locking unit, preferably a reset element, an efficiency and/or a comfort can be further increased. Thereby, a high comfort can be provided. Moreover, a particularly user-friendly and easy-handling construction for locking and unlocking of at least an actuation unit can be achieved. Preferably, the latching unit is in the rest position in a same position/orientation as in the latch position relative to the actuation unit, wherein in particular the latching unit is free of contact with the cooperating unit in the rest position. In particular, after pulling the operating element along the axial direction the user and/or installer can unhand the operating element and due to the spring element, the actuation unit and/or the latching unit is automatically transferred back.

Furthermore, a method for assembling the transmission connector device is proposed. Preferably, the method for assembling the transmission connector device comprises a method step, in particular a cable preparation step, in which the cable is prepared for being received and/or being at least partly part of the transmission connector device. The method for assembling the transmission connector device preferably comprises a further method step, in particular main assembly step, wherein the holding unit and/or the operation element and/or the cable boot unit and/or the reset element are arranged around the cable and/or relative to each other and/or connected to each other. Preferably, at least part of the actuation unit and/or the latching unit are arranged around at least the holding unit in the method for assembly. The reset element is preferably snapped at least with the holding unit in the method for assembly.

Moreover, a method for operating an, in particular above-named, transmission connector device is proposed, wherein the transmission connector device comprises an, in particular above-named, actuation unit, wherein the actuation unit is pulled along an, in particular above-named, axial direction for actuating the latching unit, thereby transferring the latching unit from a latch position into a release position, wherein the transmission connector device comprises an, in particular above-named, locking unit which locks the actuation unit and which comprises an, in particular above-named, operating element, wherein the operating element actuates the locking unit, wherein the transmission connector device comprises an, in particular above-named, reset element, which transfers at least the actuation unit back from the unlocked position into the locked position, and wherein the operating element is rotated around the axial direction. Thereby, improved characteristics regarding an improved fixation and/or a releasement mechanism, comfort and/or construction of the transmission connector device can be achieved. Preferably, the method for operating the transmission connector device comprises a method step, in particular a connection step, in which the latching unit latches the transmission connector device with the cooperating unit, preferably merely by a translational movement, in particular free of a rotational movement, of the transmission connector device towards the cooperating unit. The method for operating the transmission connector device preferably comprises a further method step, in particular an unlocking step, in which the actuation unit is unlocked by means of the locking unit, in particular the operating element. Preferably, the unlocking step takes place after the connection step. In particular the latching unit is in the latch position in the unlocking step and/or the transmission connection device is connected to the cooperating unit in the unlocking step. The operating element is preferably operated, in particular rotated around the axial direction, by the user and/or installer in the unlocking step. In a further method step, in particular an unlatching step, of the method for operating the transmission connector device, the unlocked actuating unit is preferably pulled along the axial direction, thereby transferring the latching unit from the latch position into the release position. In the unlatching step, the user preferably pulls the actuating unit, in particular by means of the operating element and/or cable boot unit. Preferably, the unlatching step takes place after the unlocking step, in particular, the actuation unit is in the unlocked position during the unlatching step. In a further method step, in particular a reset step, of the method for operating the transmission connector device, the reset element preferably transfers at least the actuation unit back from the unlocked position into the locked position. Preferably, the reset element transfers the transmission connector device in the reset step to a state, for which the connection step can take place. In particular, the reset step takes place after the unlatching step. Preferably, the user and/or installer has to apply the reset force to at least the operating element in the unlatching step, to keep the reset element from transferring at least the actuation unit back from the unlocked position into the locked position, in particular to keep the operating element from rotating around the axial direction.

Herein the transmission connector device, the transmission connector, the system, the method for assembling the transmission connector device and/or the method for operating the transmission connector device are/is not to be limited to the application and implementation described above. In particular, for the purpose of fulfilling a functionality herein described, the transmission connector device, the transmission connector, the system, the method for assembling the transmission connector device and/or the method for operating the transmission connector device may comprise a number of respective elements, structural components and/or units and/or method steps that differs from the number mentioned herein. Furthermore, regarding the value ranges mentioned in this disclosure, values within the limits mentioned are to be understood to be also disclosed and to be used as applicable.

### Drawings

Further advantages may become apparent from the following description of the drawings. In the drawings two exemplary embodiments of the invention are shown. The drawings, the description and the claims contain a plurality of features in combination. The person having ordinary skill in the art will purposefully also consider the features separately and will find further expedient combinations.

It is shown in:
- Fig. 1: a schematic view of a system comprising a transmission connector device and a cooperating unit for cooperating with the transmission connector device,
- Fig. 2: a sectional view of the system according to figure 1,
- Fig. 3: an exploded view of the system according to figure 1,
- Fig. 4: a reset element of the transmission connector device,
- Fig. 5: a releasement mechanism for releasing the transmission connector device from the cooperation unit, wherein an actuation unit of the transmission connector device is in a locked position (a) and an unlocked position (b),
- Fig. 6: a latching unit of the transmission connector device,
- Fig. 7: an actuation unit and a holding unit of the transmission connector device,
- Fig. 8: another detail view of the actuation unit and a holding unit according to figure 7,
- Fig. 9: a flow diagram for a method to operate the transmission connector device,
- Fig. 10: a flow diagram for a method to assemble the transmission connector device,
- Fig. 11: a schematic view of a second embodiment of a system comprising a transmission connector device and a cooperating unit for cooperating with the transmission connector device,
- Fig. 12: a sectional view of the system according to figure 11,
- Fig. 13: an exploded view of the system according to figure 11 and
- Fig. 14: a releasement mechanism for releasing the transmission connector device from the cooperation unit in the second embodiment, wherein an actuation unit of the transmission connector device is in a locked position (a) and an unlocked position (b).

### Description of the two exemplary embodiments

If there is more than one specimen of a certain object, only one of these is given a reference sign in the figures and in the description. The description of this specimen may be correspondingly transferred to the other specimens of the object.

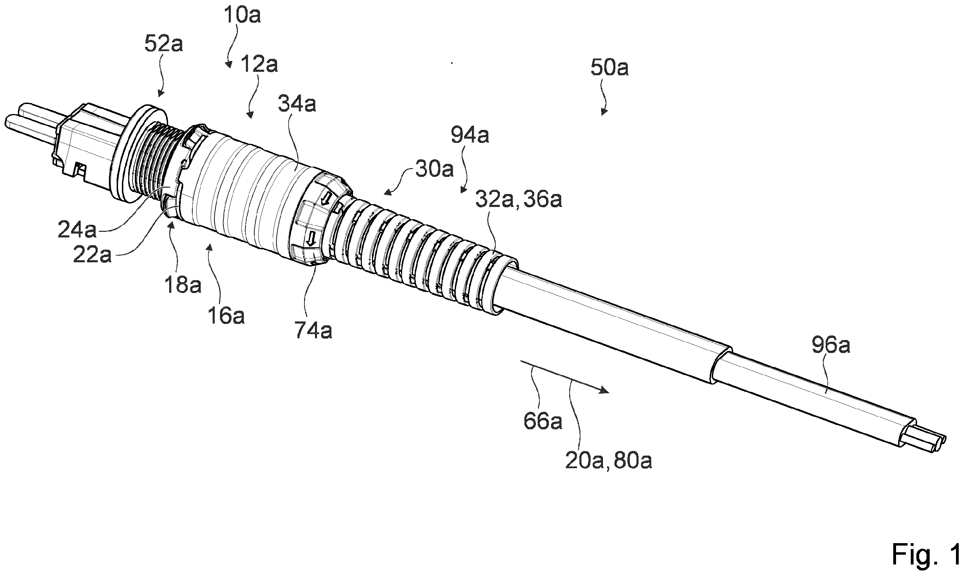

Figure 1 schematically shows a system 50a comprising a transmission connector device 12a and a cooperating unit 52a for connecting with at least the transmission connector device 12a. The transmission connector device 12a is part of a transmission connector 10a, which accordingly belongs to the system 50a. The system 50a is embodied as a transmission system for data and/or power. In this present case, the system 50a is exemplary embodied as an optical fiber system. The transmission connector 10a is embodied as a data transmission connector, for example as an optical fiber connector. In this case the transmission connector device 12a is accordingly embodied as a data transmission connector device, for example as an optical fiber connector device. The system 50a is intended for a use in a harsh environment.

The cooperating unit 52a is embodied as an adapter unit and is configured for connecting the transmission connector device 12a with at least one further transmission connector device (not depicted). The further transmission connector device can be part of the system 50a. The cooperating unit can for example connect the transmission connector device 12a with two further transmission connector devices. The cooperating unit 52a is intended to establish at least a safe and/or secure connection between the transmission connector device 12a with the further transmission connector device, wherein the cooperating unit 52a is intended to the at least safe and/or secure connection in the harsh environment.

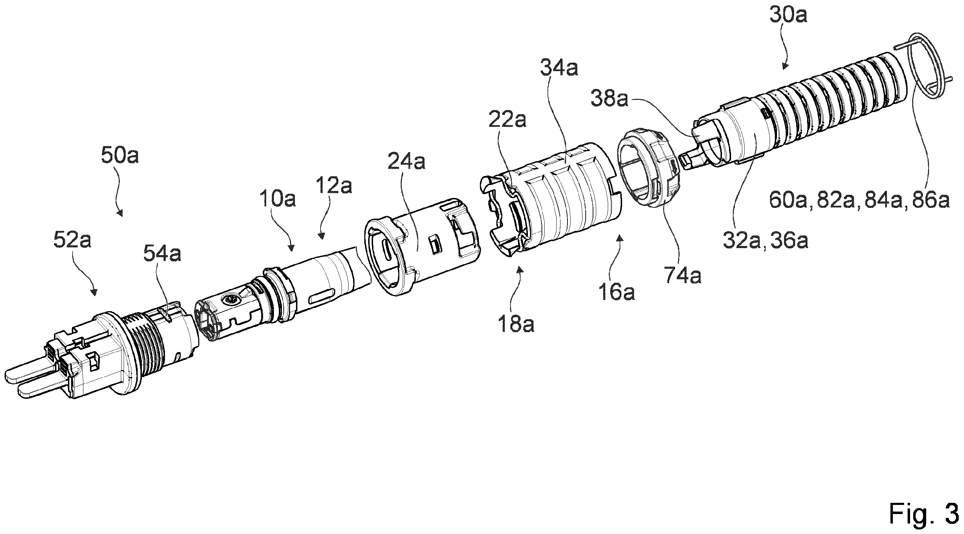

For latching with the cooperating unit 52a the transmission connector device 12a comprises a latching unit 18a. The transmission connector device 12a comprises an actuation unit 16a for actuating the latching unit 18a by pulling along an axial direction 20a and thereby transferring the latching unit 18a from a latch position into a release position. In this context, the latch position is to be understood as a position, in which the latching unit 18a latches the transmission connector device 12a with the cooperating unit 52a (cf. figures 1 to 3). Herein, the cooperating unit 52a has at least one recess 54a for receiving at least a portion of the latching unit 18a (cf. figure 3). In the release position, the latch between the transmission connector device 12a and the cooperating unit 52a is released.

The transmission connector device 12a comprises a locking unit 30a for locking the actuation unit 16a. The locking unit 30a prevents actuation of the latching unit 18a in a locked position of the actuation unit 16a.

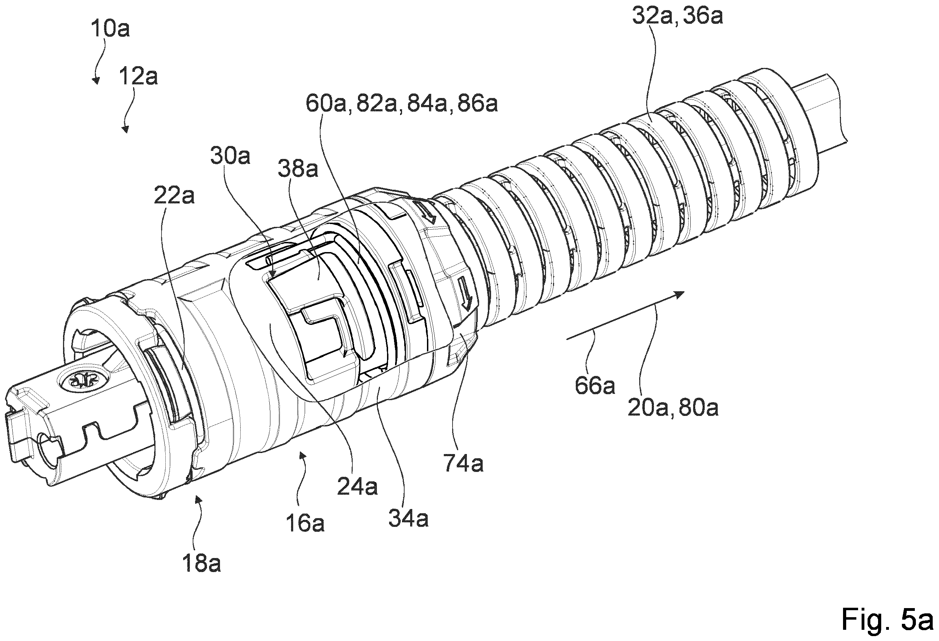

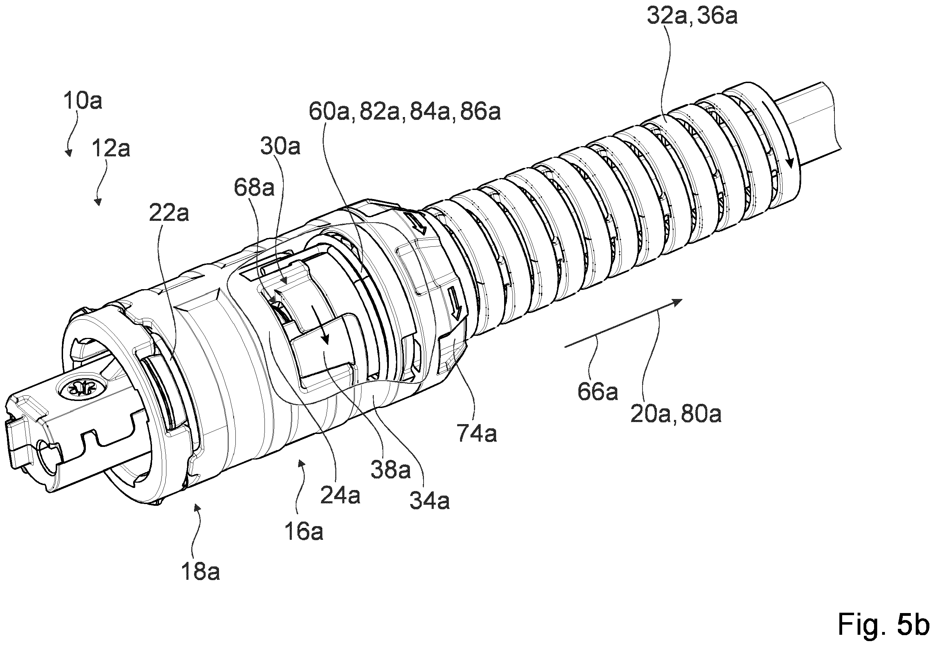

The locking unit 30a comprises an operating element 32a for actuating the locking unit 30a. The operating element 32a is configured to transfer the actuation unit 30a from the locked position (cf. figure 5a) to an unlocked position (cf. figure 5b). The operating element 32a is intended to be contacted by the user and/or installer and can in particular serve as a handle. The operating element 32a is at least intended to be actuated by the user and/or installer for unlocking of the locking unit 30a. The transmission connector device 12a comprises a cable boot unit 36a. The cable boot unit 36a at least partially forms the operating element 32a. In the present case, the operating element 32a is implemented as the cable boot unit 36a. Alternatively, the cable boot unit 36a and the operating element 32a could be implemented separately to each other and for example connected to each other.

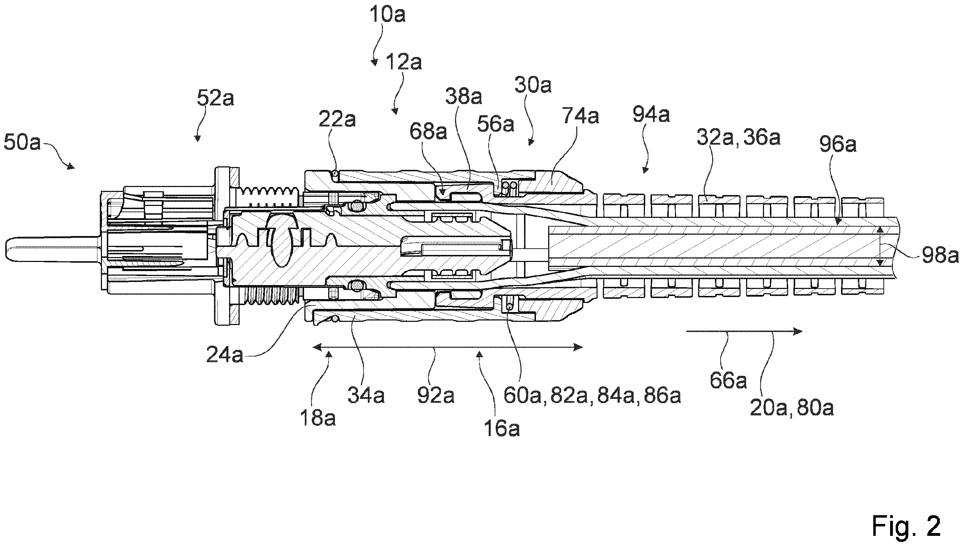

Figure 2 shows a cross-section of the transmission connector device 12a in the latched and locked position. The locking unit 30a prevents a relative movement 66a of the actuation unit 16a along the axial direction 20a. The relative movement 66a is a movement relative to at least a holding unit 24a. The locking unit 30a prevents the relative movement 66a in the locked position. The locking unit 30a prevents the pulling of the actuation unit 16a relative to the holding unit 24a along the axial direction 20a in the locked position of the actuation unit 16a.

The transmission connector device 12a comprises the holding unit 24a. The holding unit 24a has a fixed translational and rotational position in regard to the cooperating unit 52a in the locked and unlocked position. The locking unit 30a prevents movement of the operating element 32a along the axial direction 20a in the locked position. To prevent the relative movement 66a, the operating element 32a is fixed to the holding unit 24a with respect to the axial direction 20a in the locked position. The operating element 32a engages with a fixating recess 68a in the holding unit 24a in the locked position.

The operating element 32a comprises at least one fixating arm 38a. In this exemplary embodiment, the operating element 32a comprises at least two fixating arms 38a. Alternatively, it is also conceivable that the operating element 32a comprises more than two fixating arms 38a. The fixating arm 38a is snapped with the holding unit 24a in the locked position. The fixating arm 38a engages with the fixating recess 68a in the holding unit 24a in the locked position.

The operating element 32a is fixed to the actuation unit 16a with respect to at least one direction 80a.The cable boot unit 36a is fixed to the actuation unit 16a with respect to the at least one direction 80a. The at least one direction 80a is the axial direction 20a. The cable boot unit 36a is in particular fixed to the actuation unit 16a with respect to the at least one direction 80a in the locked position and in the unlocked position.

The actuation unit 16a comprises at least one counter fit element 56a. Presently, the actuation unit 16a comprises two counter fit elements 56a. Alternatively, it is also conceivable that the actuation unit 16a comprises more than two counter fit elements 56a. The counter fit element 56a extends partially along the circumferential direction of the actuation unit 16a. The counter fit element 56a is here exemplary bar-shaped in the circumferential direction. It is however also conceivable that the counter fit element 56a has a shape different from a bar-shape known to someone skilled in the art.

The fixating arm 38a is configured to engage with the counter fit element 56a. The counter fit element 56a abuts the fixating arm 38a in the locked position and in the unlocked position. The fixating arm 38a rests against the counter fit element 56a along the axial direction 20a. The interaction of the counter fit element 56a and the fixating arm 38a couples a movement of the operating element 32a along the axial direction 20a to the relative movement 66a of the actuation unit 16a along the axial direction 20a. By pulling the counter fit element 36a, the fixating arm 38a is pushing against the counter fit element 56a and thereby the actuation unit 16a can also be moved and/or actuated along the axial direction 20a.

The actuation unit 16a comprises an actuation element 34a. The actuation element 34a is formed as an outer sleeve for receiving a portion of the transmission connector device 12a.

The actuation unit 16a comprises a guidance element 74a for guiding the user and/or installer regarding unlocking of the actuation unit 16a. The guidance element 74a is configured to indicate a direction of a user operation at the operating element 32a to unlock the actuation unit 16a. The guidance element 74a comprises marked arrows to indicate the direction of the rotation of the operating element 32a to unlock the actuation unit 16a (cf. figure 1). Alternatively, the actuation unit 16a and/or the transmission connector device 12a could be implemented free of the guidance element 74a.

An overall length 92a of the actuation unit 16a is less than 60 mm in the axial direction 20a. Presently, the overall length 92a is at least substantially 35 mm. The overall length 92a of the actuation unit 16a is a sum of a length of the actuation element 34a and of the guidance element 74a in the axial direction 20a.

The transmission connector device 12a comprises a cable receptacle unit 94a configured for receiving an oval-shaped cable 96a (cf. figure 1). The cable receptable unit 94a is configured for receiving different rounded shapes of cables (not depicted) beside oval-shaped cables. The cable receptacle unit 94a is also configured to receive circular-shaped cables (not depicted). The cable receptable unit 94a comprises at least the cable boot unit 36a.

The cable receptacle unit 94a is configured for receiving a cable 96a with a diameter 98a of less than 10 mm and more than 2 mm. Presently, the cable receptacle unit 94a is configured to receive an oval cable 96a, wherein the diameter 98a has a minimal value of 4 mm to 6 mm and a maximal value of 8 mm to 9 mm.

Figure 3 shows an exploded view of the system 50a and in particular the transmission connector device 12a. The transmission connector device 12a comprises at least one reset element 60a for transferring at least the actuation unit 16a back from the unlocked position (cf. figure 5b) into the locked position (cf. figure 5a). The reset element 60a is configured to provide a reset force to transfer the actuation unit 16a from the unlocked position into the locked position.

The reset element 60a is intended for automatically transferring the latching unit 18a into a rest position after a disconnection between the transmission connector device 12a and the cooperating unit 52a.The latching unit 18a is in a same orientation and position relative to the actuation unit 16a in the rest position and in the latch position. The latching unit 18a is free of contact with the cooperation unit 52a in the rest position. The latching unit 18a is in the rest position in the transmission connector device 12a disconnected from the cooperating unit 52a.

The reset element 60a is an elastic element 82a. The reset element 60a provides the reset force automatically after deformation. The reset element 60a is in a relaxed state in the locked position (cf. figure 5a). The reset element 60a is in a stressed state in the unlocked position (cf. figure 5b) until automatic reset of the reset element 60a to the relaxed state after complete unlocking of the actuation unit 16a and/or for disconnection between the transmission connector device 12a and the cooperating unit 52a. The reset element 60a has a basic shape in the relaxed state. The reset element 60a is deformed from the basic shape in the stressed state. Alternatively, the reset element 60a could be inelastic.

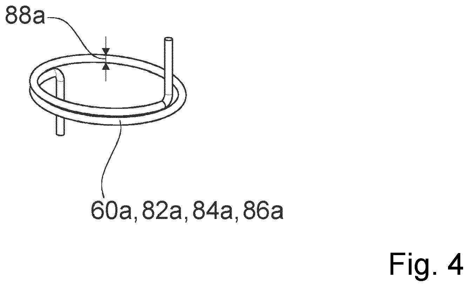

Figure 4 shows the reset element 60a in the relaxed state in more detail. In the present embodiment, the reset element 60a comprises a torsion spring 84a. Presently, the reset element 60a is formed by the torsion spring 84a. The torsion spring 84a is helical. The reset element 60a is configured to be twisted by sideways forces perpendicular to the axial direction 20a for unlocking of the locking unit 30a (cf. figures 5a and 5b). The reset element 60a, namely the torsion spring 84a, comprises here exemplary less than two windings. Alternatively it is also conceivable, that the reset element 60a, in particular the torsion spring 84a, comprises two windings or more than two windings. The transmission connector device 12a presently comprises only one reset element 60a. Alternatively it is also conceivable that the transmission connector device 12a comprises more than one reset element 60a.

The reset element 60a is at least partially made of metal. The reset element 60a is at least partially made of a wire 86a. The reset element is implemented as a metal wire 86a. Alternatively, the reset element 60a could be made of a different elastic material, for example plastic and/or rubber and/or the likes.

The wire 86a can have a diameter 88a of maximally 5 mm. The wire 86a can have a diameter 88a of 0.5 mm to 1.5 mm. Presently, the wire 86a has an exemplary diameter 88a of 0.8 mm.

In figures 5a and 5b the releasement mechanism for releasing the connection between the transmission connector device 12a and the cooperating unit 52a is depicted schematically. For a better understanding, the actuation element 34a is partly cut open to show the interior of the actuation unit 16a and to reveal a connection between the actuation unit 16a, the holding unit 24a and the locking unit 30a. The latching unit 18a is in the latch position in figures 5a and 5b.

In figure 5a the actuation unit 16a is in the locked position. The reset element 60a is connected, namely snapped with the holding unit 24a. This fixation exists in in the locked position and unlocked position of the actuation unit 16a. The cable boot unit 36a is fixed to the holding unit 24a with respect to the axial direction 20a.

Figure 5b shows the actuation unit 16a in the unlocked position. For transferring the actuation unit 16a from the locked position into the unlocked position, the operating element 32a, in this case the cable boot unit 36a, is rotatable. The operating element 32a is mounted rotatably around the axial direction 20a. The operating element 32a is rotatable around the axial direction 20a to unlock the locking unit 30a. The operating element 32a is intended to be rotated by a user and/or installer to unlock the locking unit 30a. In the present case, the operating element 32a is rotatable counter-clockwise around the axial direction 20a when viewed in a direction from the transmission connector device 12a to the cooperating unit 52a to unlock the locking unit 30a. By rotating the operating element 32a, at least the fixating arm 38a is intended to disengage from the fixating recess 68a of the holding unit 24a.

The relative movement 66a of the actuation unit 16a along the axial direction 20a is possible in the unlocked position of the actuation unit 16a. The actuation unit 16a is pullable along the axial direction 20a relative to the holding unit 24a and the latching unit 18a is actuatable in the unlocked position actuation unit 16a. The connection between the transmission connector device 12a and the cooperating 52a is releasable in the unlocked position of the actuation unit 16a. For transferring the latching unit 18a from the latch position into the release position, the actuation unit 16a has to be pulled along the axial direction 20a relative to the holding unit 24a by means of the operating element 32a, namely the cable boot unit 36a. Due to the connection of the operating element 32a with the actuation unit 16a, pulling the operating element 32a along the axial direction 20a relative to the holding unit 24a causes the actuation unit 16a to be pulled correspondingly.

At least portions of the reset element 60a are rotatable around the axial direction 20a. The reset element 60a is configured to rotate the operating element 32a back from the unlocked position (cf. figure 5b) to the locked position (cf. figure 5a). At least a portion of the reset element 60a connected to the operating element 32a is rotatable around the axial direction 20a with the operating element 32a. In the present case, the operating element 32a is rotatable clockwise around the axial direction 20a when viewed in a direction from the transmission connector device 12a to the cooperating unit 52a by means of the reset element 32a to lock the locking unit 30a.

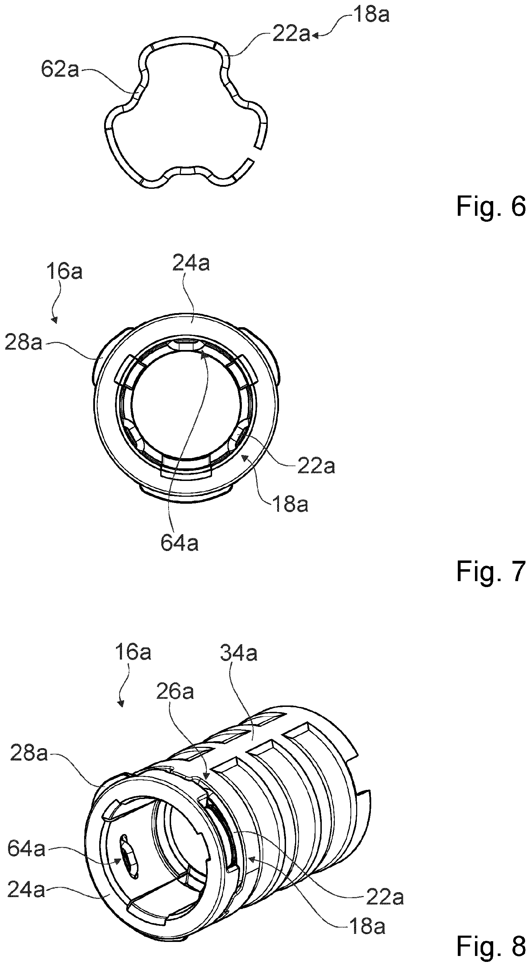

In figure 6 the latching unit 18a is shown in detail. The latching unit 18a comprises an at least partially ring-shaped spring element 22a. The spring element 22a is made in a one-piece embodiment. Figure 6 demonstrates that the spring element 22a is embodied as a wire clip. It can be possible that the spring element 22a is closed but in the present case, the spring element 22a is embodied as a C-shaped wire clip. The spring element 22a has at least one concave hollow 62a along a circumferential direction of the spring element 22a. In this case, the spring element 22a has three concave hollows 62a.

Figures 7 and 8 show a detailed view of the actuation unit 16a, the latching unit 18a and the holding unit 24a and their arrangement relative to each other. The holding unit 24a is configured for holding the latching unit 18a with respect to the axial direction 20a in relation to the actuation unit 16a.

The holding unit 24a is configured to hold portions of the latching unit 16a on an inner side of the holding unit 24a. The holding unit 24a has at least one hole 64a which is configured for receiving portions of the latching unit 18a, namely portions of the spring element 22a. In this exemplary case, the holding unit 24a has three holes 64a for receiving the spring element 22a at least in sections. The holes 64a are embodied identical to each other. The concave hollow 62a of the spring element 22a is arrangeable in the hole 64a (cf. figures 7 and 8). In the latch position the latching unit 18a, namely the spring element 22a, extends through at least the hole 64a and is inserted in the recess 54a of the cooperating unit 52a. The actuation unit 16a is configured to hold further portions of the latching unit 18a, namely further portions of the spring element 22a, on an outer side of the actuation unit 16a, which is in particular arranged around an outer side of the holding unit 24a. The actuation unit 16a comprises at least one channel 26a, in which the latching unit 18a is partially arranged. The channel 26a is configured to receive the further portions of the latching unit 18a. The channel 26a is formed on the outer side of the actuation unit 16a. The actuation element 34a at least partially delimits the channel 26a. In the present case, the actuation unit 16a comprises at least three channels 26a in the circumferential direction of the actuation unit 16a. The channels 26a are embodied identical to each other. The portions and the further portions of the latching unit 18a, in particular of the spring element 22a, are arranged on opposite sides of the latching unit 18a, in particular of the spring element 22a, along a circumferential direction of the latching unit 18a.

The actuating unit 16a comprises at least one guiding element 28a which is intended to stretch the latching unit 18a by pulling the actuation unit 16a. In this exemplary case, the actuating unit 16a comprises at least three guiding elements 28a. The guiding element 28a at least partially delimits the channel 26a. The guiding element 28a is intended for holding the latching unit 18a in the channel 26a at least in the latch position. The guiding element 28a and the actuation element 34a are configured to hold the latching unit 18a, namely the spring element 22a, in the channel 26a at least in sections on sides facing away from each other, in particular in regard to a direction parallel to the axial direction 20a, of the latching unit 18a. The actuation element 34a and the guiding element 28a are arranged on opposite sides, in particular in regard to the direction parallel to the axial direction 20a, of the channel 26a for delimiting the channel 26a.

In the release position of the latching unit 18a, the latching unit 18a is deformed so that the latch is released. For stretching the latching unit 18a the guiding element 28a is movable at least partially under the latching unit 18a by pulling the actuating unit 16a. If the latching unit 18a is in the released position the transmission connector device 12a can be completely disconnected from the cooperating unit 52a, namely by pulling the operating element 32a along the axial direction 20a.

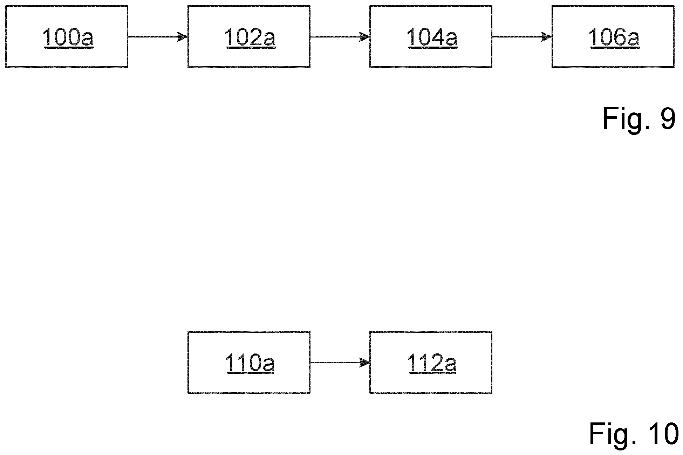

Figure 9 shows a flow diagram for a method for operating the transmission connector device 12a, wherein the actuation unit 16a is pulled along the axial direction 20a for actuating the latching unit 18a, thereby transferring the latching unit 18a from the latch position into the release position, wherein the transmission connector device 12a comprises the locking unit 18a, which locks the actuation unit 16a and has an operating element 32a which actuates the locking unit 30a, wherein the transmission connector device 12a comprises the reset element 60a, which transfers at least the actuation unit 16a back from the unlocked position into the locked position, and wherein the operating element 32a is rotated around the axial direction 22a.

The method for operating the transmission connector device 12a comprises a connection step 100a, in which the latching unit 18a latches the transmission connector device 12a with the cooperating unit 52a by a translational movement of the transmission connector device 12a towards the cooperating unit 52a.

The method for operating the transmission connector device 12a comprises an unlocking step 102a, in which the actuation unit 16a is unlocked by means of the locking unit 16a. The operating element 32a is rotated around the axial direction 22a in the unlocking step 102a.

In an unlatching step 104a of the method for operating the transmission connector device 12a, the unlocked actuating unit 16a is pulled along the axial direction 20a, thereby transferring the latching unit 18a from the latch position into the release position. In the unlatching step 104a, the actuating unit 16a is pulled by means of the operating element 32a. In an unlatching step 104a, the transmission connector device 12a is separated from the cooperating unit 52a.

The method for operating the transmission connector device 12a comprises a reset step 106a, wherein the reset element 60a transfers at least the actuation unit 16a back from the unlocked position into the locked position. In the reset step 106a, the operating element 32a is rotated back by means of the reset element 60a. The reset element 32a transfers the transmission connector device 12a in the reset step 106a to a state, for which the connection step 100a can take place.

Figure 10 shows a flow diagram for a method for assembling the transmission connector device 12a. The method for assembling the transmission connector device 12a comprises a cable preparation step 11 0a, in which the cable 96a is prepared for being received and/or being at least partly part of the transmission connector device 12a. In a main assembly step 112a of the method for assembling the transmission connector device 12a, the holding unit 24a is connected to receive at least a portion of the cable 96a. In the main assembly step 112a, the operating element 32a is connected rotatably around the axial direction 20a with the holding unit 24a. The reset element 60a is connected to the holding unit 24a and, in the present embodiment, to the operating element 32a in the main assembly step 112a. The actuation unit 16a is connected to at least the holding unit 24a in the main assembly step 112a. The actuation unit 16a is connected unrotatable around the axial direction 20a relative to the holding unit 24a. In the main assembly step 112a, the latching unit 18a, namely the spring element 22a, is connected to be held by the holding unit 24a and the actuation unit 16a.

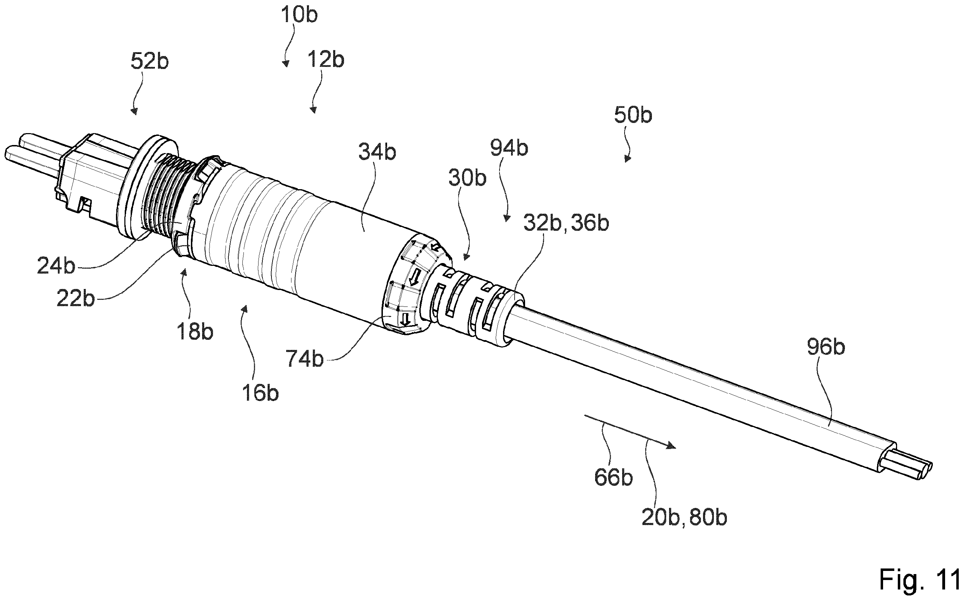

Figures 11 to 14 show a further exemplary embodiment of the invention. The following description is substantially limited to the differences between the exemplary embodiments, wherein regarding structural elements, features and functions that remain the same the description of the other exemplary embodiment, in particular the exemplary embodiment of figures 1 to 10, may be referred to. For distinguishing the exemplary embodiments, the letter a of the reference signs in the exemplary embodiment of figures 1 to 10 has been substituted by the letter b in the reference signs of the further exemplary embodiment of figures 11 to 14. Regarding structural elements having the same denomination, namely regarding structural elements having the same reference signs, principally the drawing and/or the description of the other exemplary embodiment, in particular of the exemplary embodiment of figures 1 to 10, may be referred to.

Figure 11 shows a system 50b in a second embodiment comprising a transmission connector device 12b and a cooperating unit 52b for connecting with at least the transmission connector device 12b.

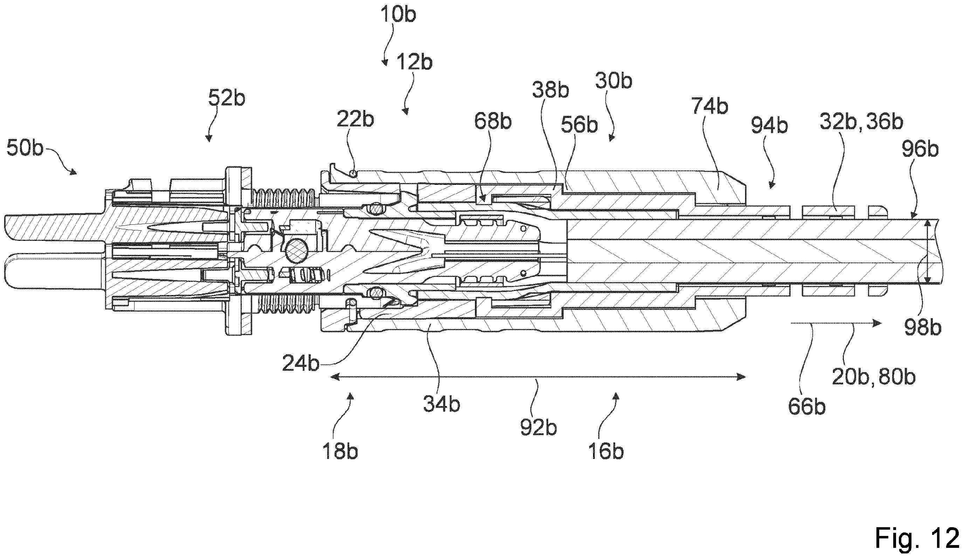

Figure 12 depicts a cross-section of the transmission connector device 12b in a latched and locked position. An actuation unit 16b of the transmission connector device 12b comprises only one counter fit element 56b, which extends entirely along the circumferential direction of the actuation unit 16b. The counter fit element 56b is implemented as an inner edge of the actuation unit 16b.

Presently, an overall length 92b of the actuation unit 16b is at least substantially 51 mm.

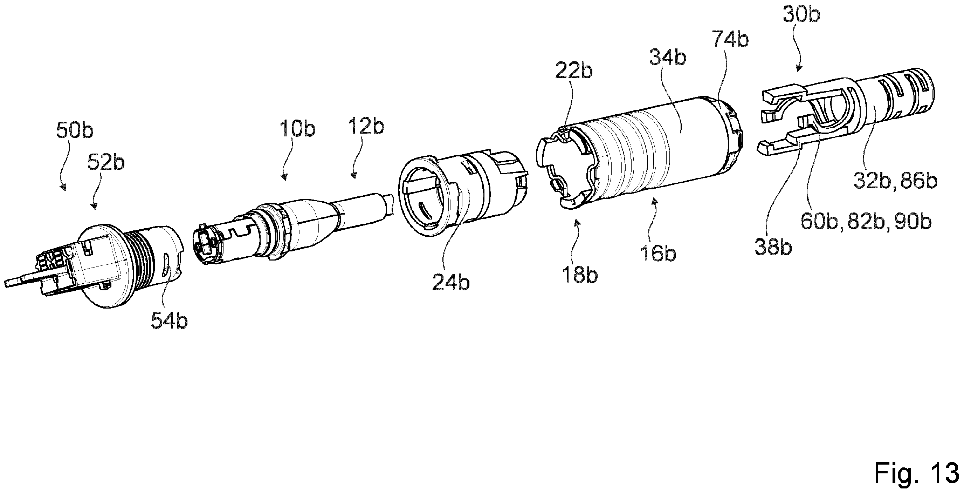

Figure 13 shows an exploded view of the system 50b and in particular the transmission connector device 12b. The transmission connector device 12b comprises a locking unit 30b with an operating element 32b. The operating element 32b comprises two fixating arms 38b.

A reset element 60b of the transmission connector device 12b is implemented integrally with at least part of the locking unit 30b. The reset element 60b is implemented integrally with the operating element 32b.

The reset element 60b comprises an arm-shaped element 90b. The transmission connector device comprises two reset elements 60b. The reset element 60b is formed as the arm-shaped element 90b. The two fixating arms 38b and the two arm-shaped elements 90b are arranged in an alternating manner around an axial direction 20b.

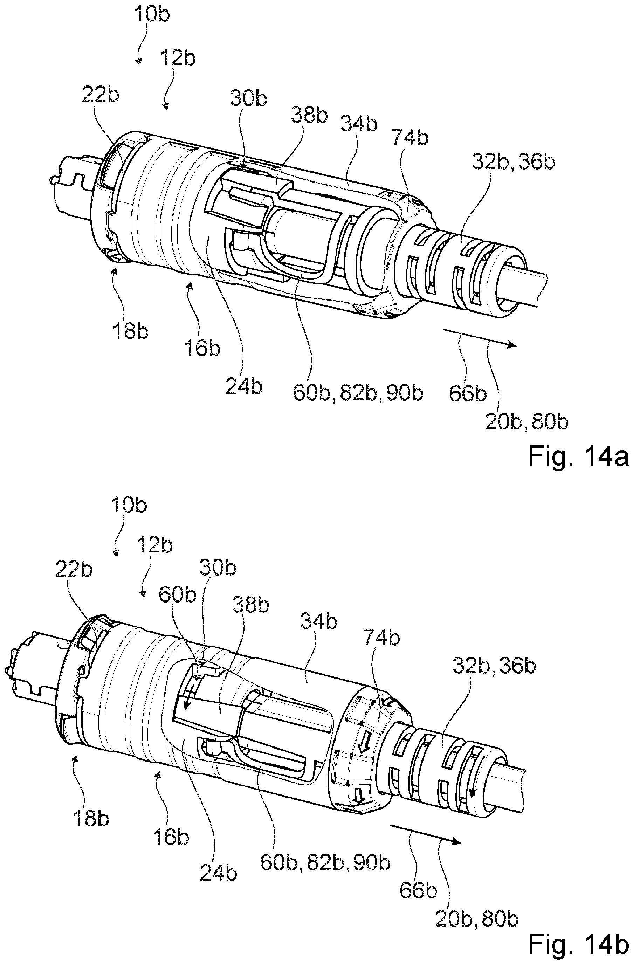

Figure 14a shows the transmission connector device 12b in a locked position of the actuation unit 16b. Figure 14b shows the transmission connector device 12b in an unlocked position of the actuation unit 16b. The arm-shaped element 90b is configured to be bent from a relaxed state of the reset element to a stressed state of the reset element 60b for a transfer from the locked position to the unlocked position of the actuation unit 16b.

### Reference numerals

- 10: transmission connector
- 12: transmission connector device
- 16: actuation unit
- 18: latching unit
- 20: axial direction
- 22: spring element
- 24: holding unit
- 26: channel
- 28: guiding element
- 30: locking unit
- 32: operating element
- 34: actuation element
- 36: cable boot unit
- 38: fixating arm
- 50: system
- 52: cooperating unit
- 54: recess
- 56: counter fit element
- 60: reset element
- 62: hollows
- 64: hole
- 66: relative movement
- 68: fixating recess
- 74: guidance element
- 80: direction
- 82: elastic element
- 84: torsion spring
- 86: wire
- 88: diameter
- 90: arm-shaped element
- 92: length
- 94: cable receptacle unit
- 96: cable
- 98: diameter
- 100: connection step
- 102: unlocking step
- 104: unlatching step
- 106: reset step
- 110: preparation step
- 112: main assembly step

## Claims

1. Transmission connector device (12a; 12b) comprising:
- an actuation unit (16a; 16b) for actuating a latching unit (18a; 18b) by pulling along an axial direction (20a; 20b) and thereby transferring the latching unit (18a; 18b) from a latch position into a release position; and
- a locking unit (30a; 30b) for locking the actuation unit (16a; 16b), having an operating element (32a; 32b) for actuating the locking unit (30a; 30b), **characterized by**
- at least one reset element (60a; 60b) for transferring at least the actuation unit (16a; 16b) back from an unlocked position into a locked position,
wherein the operating element (32a; 32b) is mounted rotatably around the axial direction (20a; 20b).

2. Transmission connector device (12a; 12b) according to claim 1, **characterized in that** the locking unit (30a; 30b) prevents a relative movement (66a; 66b) of the actuation unit (16a; 16b) along the axial direction (20a; 20b).

3. Transmission connector device (12a; 12b) according to any one of the preceding claims, **characterized by** a cable boot unit (36a; 36b), which at least partially forms the operating element (32a; 32b).

4. Transmission connector device (12a; 12b) according to claim 3, **characterized in that** the cable boot unit (36a; 36b) is fixed to the actuation unit (16a; 16b) with respect to at least one direction (80a; 80b).

5. Transmission connector device (12a; 12b) according to any one of the preceding claims, **characterized in that** the reset element (60a; 60b) is an elastic element (82a; 82b).

6. Transmission connector device (12a; 12b) according to any one of the preceding claims, **characterized in that** at least portions of the reset element (60a; 60b) are rotatable around the axial direction (20a; 20b).

7. Transmission connector device (12a) according to any one of the preceding claims, **characterized in that** the reset element (60a) comprises a torsion spring (84a).

8. Transmission connector device (12a) according to any one of the preceding claims, **characterized in that** the reset element (60a) is at least partially made of metal and/or of a wire (86a).

9. Transmission connector device (12a) according to claim 8, **characterized in that** the wire (86a) has a diameter (88a) of maximally 5 mm.

10. Transmission connector device (12b) according to any one of the preceding claims, **characterized in that** the reset element (60b) is implemented integrally with at least part of the locking unit (30b), in particular integrally with the operating element (32b).

11. Transmission connector device (12b) according to any one of the preceding claims, **characterized in that** the reset element (60b) comprises an arm-shaped element (90b).

12. Transmission connector device (12a; 12b) according to any one of the preceding claims, **characterized in that** an overall length (92a; 92b) of the actuation unit (16a; 16b) is less than 60 mm in the axial direction (20a; 20b).

13. Transmission connector device (12a; 12b) at least according to the preamble of claim 1 and in particular according to any of the preceding claims, **characterized by** a cable receptacle unit (94a; 94b) configured for receiving an oval-shaped cable (96a; 96b).

14. Transmission connector device (12a; 12b) according to any one of the preceding claims, **characterized by** a cable receptacle unit (94a; 94b) configured for receiving a cable (96a; 96b) with a diameter (98a; 98b) of less than 10 mm and/or more than 2 mm.

15. Transmission connector device (12a; 12b) according to any one of the preceding claims, **characterized by** the latching unit (18a; 18b) comprising an at least partially ring-shaped spring element (22a; 22b).

16. Transmission connector (10a; 10b) comprising a transmission connector device (12a; 12b) according to any one of the preceding claims.

17. System (50a; 50b) comprising a transmission connector device (12a; 12b) according to any one of claims 1 to 15 and a cooperating unit (52a; 52b) for connecting with the transmission connector device (12a; 12b), wherein the cooperating unit (52a; 52b) has at least one recess (54a; 54b) for receiving at least a portion of the latching unit (18a; 18b).

18. Method for assembling a transmission connector device (12a; 12b) according to any one of claims 1 to 15.

19. Method for operating a transmission connector device (12a; 12b) according to any one of claims 1 to 15.
